# EUROPEAN PATENT SPECIFICATION

(11) **EP 1 168 781 B1**
(45) Date of publication and mention of the grant of the patent: **19.05.2004**
(21) Application number: 01304784.0
(22) Date of filing: 31.05.2001
(51) Int. Cl.: H04M 1/2745, H04Q 7/32, H04L 29/06

(54) **Call originating method and mobile terminal therefor**
Verfahren zum Aufbau eines Anrufes und ein Mobilfunkgerät dafür
Procédé de la génération d'un appel téléphonique et un terminal mobile correspondant

(30) Priority: 31.05.2000 JP 2000163041
(43) Date of publication of application: 02.01.2002
(73) Proprietor: KABUSHIKI KAISHA TOSHIBA, Kawasaki-shi, Kanagawa-ken 210-8572 (JP)
(72) Inventor: Doi, Miwako, c/o Intellectual Property Division, Tokyo 105-8001 (JP)
(74) Representative: Midgley, Jonathan Lee

(56) References cited:
- EP-A- 0 526 832
- EP-A- 0 889 660
- WO-A-00/04734
- WO-A-98/23108
- WO-A-98/48577
- WO-A-99/17568
- DE-A- 19 623 299
- DE-A- 19 711 096
- US-A- 5 946 376
- "EMERGENCY TELEPHONE CALL HANDLING" RESEARCH DISCLOSURE, KENNETH MASON PUBLICATIONS, HAMPSHIRE, GB, no. 427, November 1999 (1999-11), page 1476 XP000893328 ISSN: 0374-4353
- PATENT ABSTRACTS OF JAPAN vol. 1999, no. 14, 22 December 1999 (1999-12-22) -& JP 11 243571 A (NEC SHIZUOKA LTD), 7 September 1999 (1999-09-07)

## Description

The present invention relates to a portable mobile communication system such as cdmaOne that can be used globally.

Conventional mobile phones adopt different communication schemes in different countries. For this reason, mobile phones that are manufactured for use in Japan can be used only in Japan. Recently, with the advent of a communication scheme called cdmaOne, mobile phones of this communication scheme will be usable soon all over the world. Phones of cdmaone are now usable in Japan and Hong Kong (April 1, 2000). In the near future, those phones will be usable in other Asian countries and the U.S.

When voice communications using a single mobile phone are allowed not only in a given country but also in a plurality of countries, the following problems are posed. A telephone number that the user frequently dials is stored in the mobile phone itself as an abbreviated dialing number. For example, if "044-549-xxxx" is stored, a call can be placed within Japan but cannot be placed from Hong Kong. Hence, a number that indicates an international call and a country code of Japan must be appended to the aforementioned telephone number, and the first "0" of a city code must be removed. For example, when the user dials the aforementioned telephone number from the U.S., he or she must dial "011 (International number identification code)-81 (country code of Japan)-44-549-xxxx". In this case, the international number identification code varies depending on countries. Upon calling from the U.S. to a country other than the U.S., "011" must be appended as described above; upon calling from Japan to abroad, "001"or other international dialing numbers must be appended. In this manner, telephone numbers registered in advance such as abbreviated dialing numbers cannot often be used depending on countries from which the user originates a call.

In such case, the user can dial a full telephone number by appending the international number identification code and country code thereto without using an abbreviated dialing number. But since the user normally uses abbreviated dialing numbers, he or she cannot often remember the full telephone number. Also, a very long telephone number appended with the international number identification code and country code often leads to pushing a wrong number.

The same problem is posed when the user calls upon emergency such as fire, accidents, or the like. When the user calls an ambulance upon disease, accident, or the like, he or she can dial "119" in Japan but "911" in the U.S. In this manner, emergency call numbers differ depending on countries. However, at the critical moment, the user who is in the U.S, often dials "119" for Japanese since he or she is upset and cannot remember the correct number. Furthermore, even when the user dials "911", since a foreign operator answers, it is difficult for a user who is not a fluent speaker of English to explain the emergency contents.

Travelers often have booklets that give the telephone numbers of a local tourist office, a hospital where they speak in their mother language, and the like. However, the user normally leaves such booklet in the hotel or cannot find it from baggage at the critical moment.

Since network providers such as AOL (America OnLine) and the like have connection points worldwide, the user can access the Internet anywhere on the globe, and can exchange e-mail messages, and the like. However, a user terminal is normally set with a connection point closest to a place where he or she most frequently uses the terminal. Once he or she goes abroad, the connection point set in the user terminal must be changed. At this time, the user cannot easily find out a connection point closest to the current location or a cheapest connection point.

In this manner, the user cannot place an international call using a telephone number registered as an abbreviated dialing number in the conventional mobile communication terminal such as a mobile phone and the like, since international number identification code, country code, and the like are different in different countries.

When the user wants to receive a telephone service in his or her mother language upon emergency, he or she cannot easily call a local service provider which provides such service.

Furthermore, the user cannot easily access a connection point closest to his or her current location or a cheapest connection point to a network such as the Internet or the like anywhere he or she wants.

That is, since the conventional mobile communication terminal such as a mobile phone or the like requires different connection information used to connect to a service provider that provides services that the user wants or another terminal depending on the user location, connection information corresponding to the current user location must be retrieved and input, resulting in a heavy load on the user.

It is an object of the present invention to provide a call originating method which can originate a call using connection information which is used to connect to a service provider that provides services of user's choice or another terminal and which differs depending on the user location without imposing any load on the user, and a mobile communication terminal using the method.

We acknowledge that WO 98/48577 discloses a call origination method in a mobile telephony comprising storing telephone numbers in various countries in memory, specifying a user's location, designating an emergency number in the user's motherland, retrieving an emergency number which corresponds to the designated number and the specified location, and calling that number. Also, EP-A-0526832 discloses such a method comprising storing domestic numbers; specifying a user's location; designating a specific number; retrieving a country where the user is located; converting this to an international number when it is not the user's motherland, using a rule; and calling the number. Patent Abstracts of Japan vol. 1999, no. 14, 22 December 1999 (1999-12-22) - & JP 11243571A (1999-09-07) discloses such a method including storing dictionary data for translating the user's native language, and selecting a language based on the user's location. WO 94/29 995 discloses a call origination method, in which a network database is used to retrieve an emergency number corresponding to the terminals location. This emergency number is then used to set-up an emergency call.

The invention provides a call originating method applied to a mobile communication terminal according to Claim 1, and a mobile communication terminal according to Claim 2.

The invention can be more fully under stood from the following detailed description when taken in conjunction with the accompanying drawings, in which:
FIG. 1 is a block diagram showing an example of the arrangement of a mobile communication terminal according to the present invention;
FIG. 2 is a flow chart for explaining a select process sequence of connection information depending on location information;
FIGS. 3A and 3B are tables of connection points, which are stored in a connection information storage;
FIG. 4 is a table of connection points in case of emergency, which is stored in the connection information storage;
FIG. 5 is a block diagram showing the arrangement of a mobile communication terminal ;
FIG. 6 is a table of abbreviated dialing numbers, which is stored in a connection information storage;
FIG. 7 is a table used when a connection information converter converts a given telephone number into that suitable for an international call;
FIG. 8 is a flow chart for an international call origination process;
FIG. 9 is a block diagram showing the arrangement of a mobile communication terminal according to the present invention, which terminal acquires a table of latest connection information stored in the connection information storage via communications with a service server;
FIG. 10 is a block diagram showing an example of the arrangement of a mobile communication terminal;
FIG. 11 is a table used upon selecting a language by a language selector;
FIG. 12 is a flow chart showing the language select process of the mobile communication terminal of FIG. 10; and
FIG. 13 is a block diagram showing an example of the arrangement of a server which provides connection information to the mobile communication terminal shown in FIG. 9.

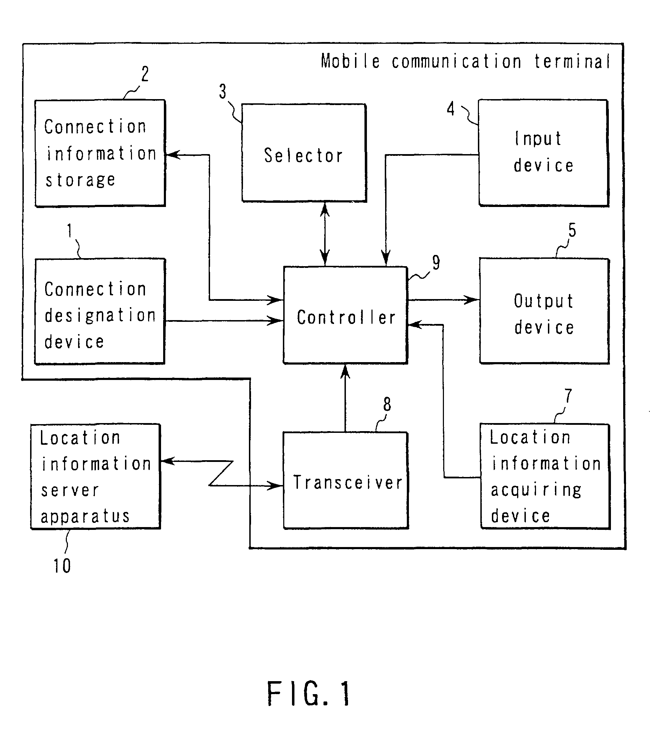

FIG. 1 shows an example of the arrangement of principal part of a mobile communication terminal (e.g., a mobile phone, PHS, or the like) of the present invention. The mobile communication terminal shown in FIG. 1 can communicate with terminals scattered worldwide using region-dependent telephone numbers (like those for a telephone network) via a network connected.

A case will be exemplified below wherein the mobile communication terminal connects a service provider that provides a connection service to the Internet.

As shown in FIG. 1, the mobile communication terminal is constructed by connecting a connection designation device 1, connection information storage 2, selector 3, input device 4, output device 5, location information acquiring device 7, and transceiver 8 to a controller 9.

The connection information storage 2 stores, e.g., location information of connection points to a network such as the Internet or the like, and information (e.g., telephone numbers) required to connect to the connection point as connection information.

The transceiver 8 sends/receives information by connecting to a telephone network using a wireless communication scheme such as cdmaOne or the like. The transceiver 8 communicates with a location information server apparatus 10 (e.g., base station in case of cdmaOne) that provides information for specifying the current location of the user.

The location information acquiring device 7 specifies the current location of the user on the basis of the radio wave strength or the like measured when the transceiver 8 communicates with the location information server apparatus 10, and holds location information of the specified current location.

The connection designation device 1 is used by the user to input a telephone number, a connection designation or the like to the Internet, and the like.

The selector 3 selects connection information best suited to the current location of the user from those stored in the connection information storage 2 on the basis of the location information acquired by the location information acquiring device 7.

The input device 4 comprises, e.g., a keyboard, microphone, and the like. The input device 4 is used to input text to be sent as an e-mail message, and to input a voice for conversation.

The output device 5 outputs information such as voice, data, and the like including menu items for selection/designation, a line connection state, a received voice, e-mail messages received or to be sent, and the like. The output device 5 comprises a display, loudspeaker, and the like.

The controller 9 controls the aforementioned devices, and executes create and send/receive processes of e-mail messages, and the like. Upon receiving a user's connection request from the connection designation device 1, the controller 9 executes a control process for sending a connection request (originating a call) to a network (e.g., a telephone network) preferentially using the connection information selected by the selector 3 (using the selected connection information unless a special instruction or the like is input by the user upon using the selected connection information).

When the user inputs a connection instruction for the purpose of connecting the user's mobile communication terminal with this arrangement to a desired communication partner, from the connection designation device 1, the mobile communication terminal with this arrangement issues a request for requesting the mobile communication terminal to connect to the telephone terminal under the control of the controller 9. Upon completion of line connection with the desired communication partner, information such as a voice, text, or the like input from the input device 4 is sent from the transceiver 8. On the other hand, when the transceiver receives information such as a voice, text, or the like, that information is output to the output device 5.

A case will be exemplified below wherein the communication scheme is cdmaOne. In this case, the location of the mobile communication terminal is specified via communications with a base station serving as the location information server apparatus 10. However, the present invention is not limited to such specific scheme. For example, the location of the mobile communication terminal may be specified via communications with a satellite using a GPS system. In this case, the location information server apparatus 10 corresponds to a GPS satellite and ground base station, and the transceiver 8 and location information acquiring device 7 correspond to a GPS receiver.

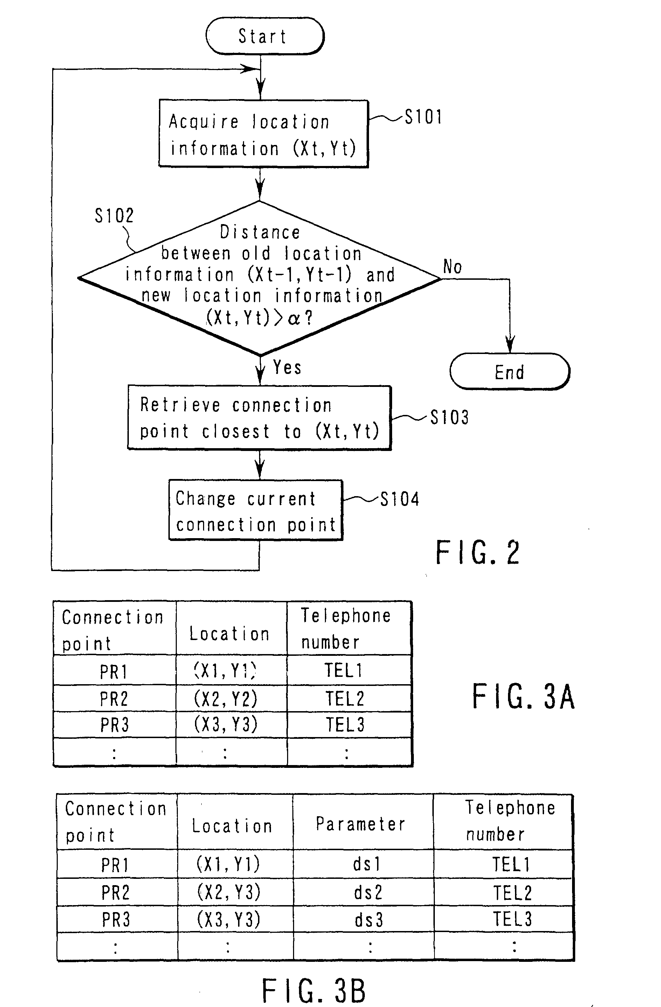

FIG. 2 shows the flow of a connection point select process. The location information used to specify the current location of the mobile communication terminal is acquired in two cases, i.e., it is acquired periodically and when the user issues a connection instruction to the Internet to execute a mail process. FIG. 2 shows the processing flow after location information is acquired in these cases.

The controller 9 holds a telephone number of the connection point that is used currently (to be referred to as a current connection point hereinafter), and issues a connection request to that connection point using the held telephone number. This telephone number is rewritten as follows.

The location information acquiring device 7 acquires the current location (Xt, Yt) via communications with the location information server apparatus 10 (step S101).

The specifying method of the location information in the location information acquiring device 7 is basically the same as that of the seismic center. More specifically, circles obtained by converting the strengths of radio waves received from a plurality of (three in most cases) base stations into distances are drawn, and the overlapping portion of the three circles is calculated as the current location.

The distance between the current location (Xt, Yt) and old location (Xt-1, Yt-1) is calculated. It is checked if the calculated distance is larger than a predetermined value (α in this case) (step S102).

If the distance between the current and old locations is not larger than α, since the location of the mobile communication terminal has not moved much from the old one, the connection point need not be changed in such case. That is, the processing ends.

If the distance is larger than α, since the current connection point must be changed, the flow advances to step S103.

The connection information storage 2 stores a connection point table, as shown in FIG. 3A. This connection point table registers location information of a plurality of connection points of respective regions set by a provider who provides Internet connection services, and the telephone numbers of these connection points.

In step S103, the selector 3 compares the location information of the current location acquired by the location information acquiring device 7, and location information of each of connection points stored in the connection information storage 2, and selects a connection point closest to the current location (Xt, Yt).

For example, the selector 3 calculates the distance between the current location (Xt, Yt) and location information (Xn, Yn) (n = 1, 2, 3, ···) of each of the connection points stored in the connection information storage 2, and selects a connection point with the smallest distance. That is, the selector 3 selects a connection point that satisfies Min(distance((Xt, Yt) - (Xn, Yn)) (n = 1, 2, 3, ···).

Note that the connection information storage 2 may store a connection point table shown in FIG. 3B. The connection point table shown in FIG. 3B registers location information of each of a plurality of connection points, their telephone numbers, and other parameters (e.g., connection fees or the like). The selector 3 may select a connection point with a minimum combination of the distance difference and parameter dsn (n = 1, 2, 3, ···). More specifically, the selector 3 selects a connection point which satisfies Min(W1·distance((Xt, Yt) - (Xn, Yn)) + W2·dsn) (n = 1, 2, 3, ···) using predetermined weighting coefficients W1 and W2.

The selector 3 then rewrites the current connection point by the telephone number of the selected connection point (step S104).

For example, assume that the telephone number of the connection point of Tokyo, Kawasaki, Yokohama, or the like in Japan is held as the current connection point of the mobile communication terminal, and the user has traveled to New York together with the mobile communication terminal. At this time, the process shown in FIG. 2 is executed to rewrite the current connection point by the telephone number of a connection point of New York closest to the location of the user (mobile communication terminal).

After the telephone number of the current connection point is rewritten in this way, when the user inputs a connection instruction to the Internet from the connection designation device 1, the controller 9 connects to the Internet using the rewritten telephone number of the connection point.

If the user is currently in New York, the mobile communication terminal connects to the Internet using the telephone number of the connection point of New York on the basis of the location information of the user acquired by the location information acquiring device 7. Therefore, the user can connect the mobile communication terminal to the Internet from a connection point which is closest to the current location of the user and can be used at the lowest fee.

When the user goes back to Japan again together with the mobile communication terminal, the process in FIG. 2 is executed, and the current connection point is rewritten by the telephone number of a connection point in Japan, which is closest to the location of the user mobile communication terminal.

In this way, the user himself or herself need not set a connection point in the mobile communication terminal in accordance with his or her current location.

If it is determined in step S102 in FIG. 2 that the distance between the previously acquired location information and currently acquired location information is larger than α, and the current connection point must be changed, the user may be informed of that state (a message may be output from, e.g., the output device 5). After user's permission, the current connection point may be changed.

In the above description, one connection point table is prepared in correspondence with an arbitrary region. However, in practice, there are a plurality of connection point tables in correspondence with a given region. Note that one table registers a plurality of connection points present in that region.

For example, connection point tables may be prepared in units of countries, and the table itself may be rewritten in correspondence with a region to which the current location belongs.

If it is determined in step S102 that the distance between the current and old locations is larger than α, and the user has moved outside Japan, the controller 9 reads out a connection point table of another country stored independently, and rewrites the connection point table of Japan stored in the connection information storage 2 by the readout connection point table of the other country. In this case, the connection point tables for respective countries may be stored in a storage independent from the connection information storage 2, or may be stored in the connection information storage 2.

Alternatively, the connection information storage 2 may store a plurality of connection point tables corresponding to regions, and a connection point table of a region near the location indicated by the location information acquired by the location information acquiring device 7 may be selected. The selected table may be searched for a connection point closest to the location indicated by the location information.

In this manner, since the data volume to be searched can be reduced by selecting one of a plurality of tables in advance, the time required for searching for a connection point corresponding to location information can be searched.

For example, a plurality of connection point tables for respective regions such as Kanto zone, Tohoku zone, Hokkaido zone, and the like in Japan are prepared, and are stored in the connection information storage 2. Furthermore, a plurality of connection point tables corresponding to countries such as the U.S., France, and the like are prepared, and are stored in the connection information storage 2.

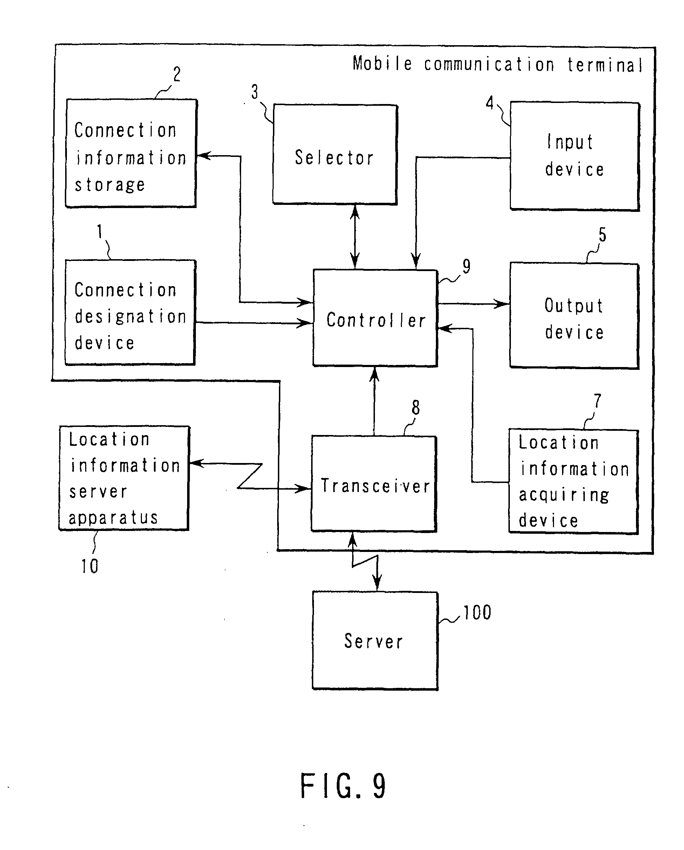

Furthermore, as shown in FIG. 9, according to the invention the transceiver 8 may communicate with a server 100 that provides a latest connection point table to the user to acquire the latest connection point table. In this case, the server 100 may be provided to each region. The mobile communication terminal pre-stores connection information (e.g., a telephone number) used to connect to the server 100 provided to each region, and the location information of that server 100. The server 100 closest to the mobile communication terminal is selected based on the location information acquired in step S101 in FIG. 2, and the pre-stored location information of each server 100. The mobile communication terminal sends a download (transmission) request of the latest connection point table to the selected server 100 using the connection information of the selected server 100. The request message to be sent to the server 100 may contain the location information acquired in step S101 in FIG. 2.

Note that a table that registers the location information and connection information of the server 100 provided to each region is stored in the connection information storage 2 as in the table shown in FIG. 3A.

The mobile communication terminal sends the aforementioned request message to the server 100, when the user inputs a connection instruction to the Internet, a connection point update instruction, or the like.

It is another object of the present invention to provide an information server apparatus that provides, to such mobile communication terminal, latest communication information used to connect a service provider of user's choice in correspondence with the user location.

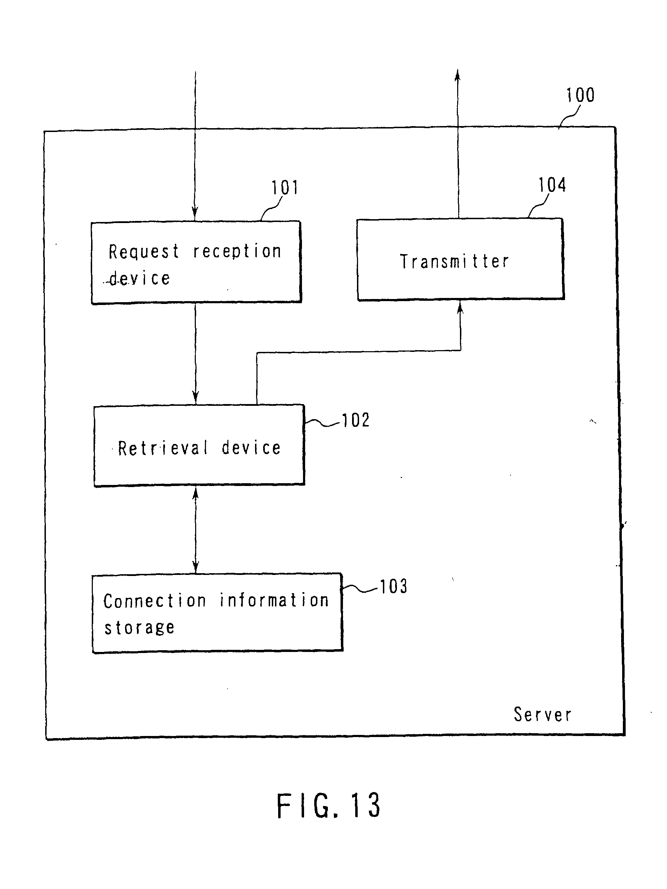

FIG. 13 shows an example of the arrangement of the server 100.

As shown in FIG. 13, the server 100 comprises a request reception device 101, retrieval device 102, connection information storage 103, and transmitter 104.

The connection information storage 103 stores one or a plurality of latest connection point tables shown in FIG. 3A or 3B. One connection point table registers information that pertains to connection points present within a given range in the format shown in FIG. 3A or 3B.

When the request reception device 101 receives a request message from the mobile communication terminal, the retrieval device 102 retrieves a connection point table corresponding to a region near the current location of the mobile communication terminal from the connection information storage 103 on the basis of the location information contained in that request message. For example, the retrieval device 102 retrieves a connection point table of a given region that includes a location indicated by the location information contained in the request message.

The retrieval device 102 passes the retrieved connection point table to the transmitter 104.

The transmitter 104 transmits the retrieved connection point table to the mobile communication terminal as the request source.

The transceiver 8 of the mobile communication terminal acquires the latest connection point table from the server 100. The controller 9 rewrites the table stored in the connection information storage 2 by the latest connection point table.

As described above, a connection point to a network such as the Internet or the like, which is closest to the location of the mobile communication terminal (user) or can be used at the lowest fee can be selected without any load on the user.

In the example described above, the service provider that provides connection services to the Internet has been exemplified. Therefore, the connection information storage 2 stores the connection point table to the Internet.

A service provider that provides services required upon emergency will be exemplified below. In this case, the connection information storage 2 stores a table of regional connection points in case of emergency.

Note that the connection points in case of emergency are those to service providers from which the user can receive emergency services in his or her mother language upon emergency while he or she is abroad. For example, in Japan as the motherland of the user, "119" is a fire engine/ambulance call, and "110" is a police call. When the connection information table 2 stores the table of connection points in case of emergency, the user can receive a service corresponding the purpose of an emergency call in the current location (country) of the user by only dialing "119" or "110" as in emergency in Japan.

The table of connection points in case of emergency registers the location information and telephone numbers of service providers of each region corresponding to the telephone numbers (e.g., "119", "110", and the like in Japan) of service providers in the user's motherland. More specifically, the telephone numbers of service providers of each region (country), which provide the same services as those of the service providers in the user's motherland, and their location information are registered in association with the telephone numbers of the service providers in the user's motherland.

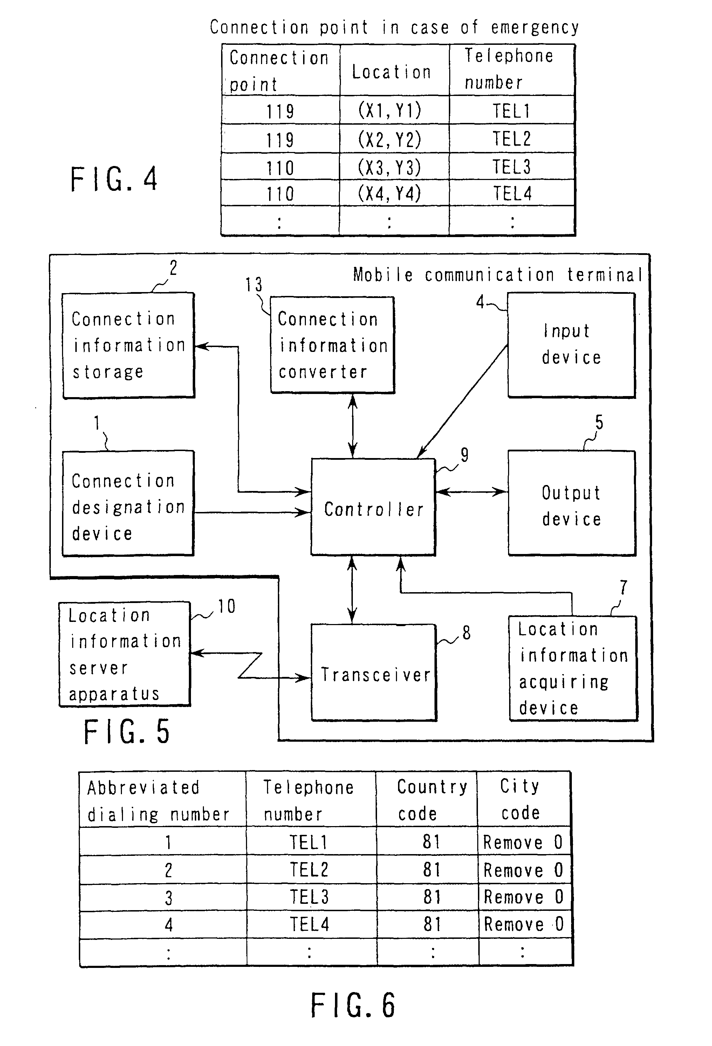

The mobile communication terminal acquires the latest location information (current location) of the user in accordance with the flow chart shown in FIG. 2 (step S101). Then, the telephone numbers of regional service providers corresponding to the service providers in the user's motherland are selected from the table shown in FIG. 4 (steps S102 and S103). The controller 9 holds the selected telephone numbers of regional service providers corresponding to those of the service providers in the user's motherland. Every time the regional service providers are changed in the processes in steps S102 and S103, the controller 9 updates the telephone numbers of regional service providers corresponding to those of the service providers in the user's motherland (step S104).

If a connection instruction to a network, i.e., a connection instruction to a service provider (e.g., telephone number "119" or "110") is input at the connection designation device 1 (if the user dials "119" or "110"), the transceiver 8 originates a call using the telephone number of the regional service provider corresponding to the instructed telephone number.

Note that the mobile communication terminal may communicate with the server 100 to acquire the latest table of connection points in case of emergency corresponding to the current location as described above.

As described above, according to the invention the user can use an optimal service provider (e.g., the closest or cheapest connection point to a network such as the Internet or the like, or a service provider that provides a required service upon emergency) dependently of the current user location.

An example, which is useful for the understanding of the present invention will be explained below focusing on differences from the invention. The example will explain a mobile communication terminal that automatically appends an international number identification code, country code, and the like to a telephone number pre-stored as an abbreviated dialing number.

FIG. 5 shows an example of the arrangement of a mobile communication terminal (e.g., a mobile phone, PHS, or the like). Only differences from FIG. 1 will be explained below. More specifically, a connection information converter 13 is connected to the controller 9 in place of the selector 3 in FIG. 1, and the connection information storage 2 stores abbreviated dialing numbers and full telephone numbers of the abbreviated dialing numbers in association with the abbreviated dialing numbers.

The connection information converter 13 converts a telephone number stored in the connection information storage 2 into an international telephone number in accordance with the current location of the user. More specifically, the converter 13 appends an international number identification code, country code, and the like to the telephone number.

The connection information storage 2 stores a table of abbreviated dialing numbers shown in, e.g., FIG. 6. This table registers full telephone numbers in association with abbreviated dialing numbers. In the table of abbreviated dialing numbers shown in FIG. 6, a country code (e.g., "81" for Japan) and a rule upon converting into an international telephone number are registered in association with the abbreviated dialing numbers.

The conversion rule into an international telephone number is, for example, "to remove first "0" of city code".

Note that the country code and the rule upon converting into an international telephone number are registered in association with the abbreviated dialing numbers in FIG. 6, but the present example is not limited to such specific table. For example, an international number identification code held by the connection information converter 13 may be registered in association with the abbreviated dialing numbers.

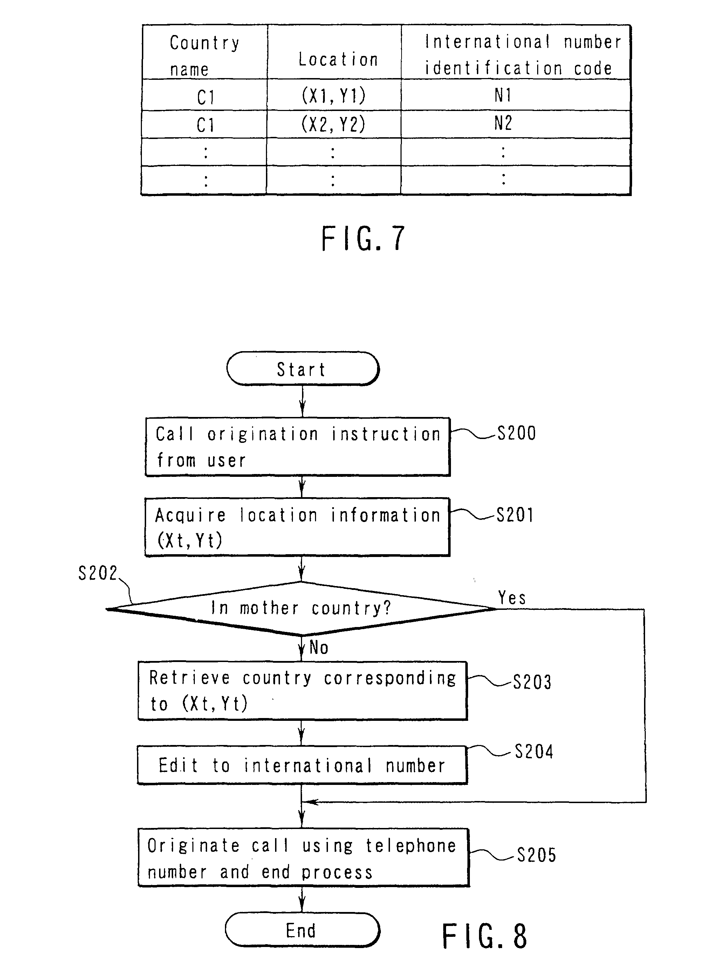

The connection information converter 13 stores a table which registers country names, representative locations, and international number identification codes in units of countries, as shown in FIG. 7. The table shown in FIG. 7 is used upon converting a telephone number into an international telephone number.

The location of each country expresses not only the representative location using the latitude and longitude, but also the range of region of the corresponding country using the latitude and longitude. In this example, the latter case will be explained.

The international call origination process will be explained below with reference to the flow chart shown in FIG. 8.

If a call origination designation is input from the connection designation device 1 when the user dials a given abbreviated dialing number (step S200), the location information acquiring device 7 acquires location information (Xt, Yt), as described above (step S201). The connection information converter 13 compares the acquired location information with the location information of each country shown in FIG. 7 to check if the user is in his or her country (step S202).

For example, if the user ordinarily lives in Japan, and the acquired location information indicates a location within the region of Japan, it is determined that the user is in his or her country. If it is determined that the user is in his or her country, the controller 9 reads out a full telephone number corresponding to the input abbreviated dialing number from the table (see FIG. 6) stored in the connection information storage, and originates a call using the readout telephone number (step S205). That is, if abbreviated dialing number "1" is input, as a telephone number corresponding to this abbreviated dialing number is "044-549-xxxx", a call is placed using that telephone number.

If it is determined in step S202 that the user is not in his or her country, the connection information converter 13 selects a country most suitable for the acquired location information (e.g., a country having location information closest to the acquired location information) from the table shown in FIG. 7 (step S203).

For example, a country that includes a location indicated by the acquired location information within the region of that country is selected.

The connection information converter 13 reads out an international number identification code of the selected country from the table shown in FIG. 7. Also, the converter 13 reads out a full telephone number designated by the abbreviated dialing number, and the corresponding country code and conversion rule from the table shown in FIG. 6.

The connection information converter 13 converts the readout telephone number into an international telephone number (in accordance with the readout conversion rule). That is, the converter 13 removes the first "0" of a city code of the telephone number, and appends the international number identification code and country code thereto, thus converting the telephone number into an international telephone number (step S204). For example, assume that a full telephone number corresponding to abbreviated dialing number "1" is "044-549-xxxx" and the current location of the user specified by the acquired location information is the U.S. In this case, the connection information converter 13 changes city code "044" of that telephone number to "44", and appends international number identification code "011" and country code "81" of Japan to that telephone number. Finally, the telephone number is converted into "011 (international number identification code)-81 (country code of Japan)-44-549-xxxx". The controller 9 originates a call using the converted telephone number (step S205).

Conversely, if a (full) telephone number registered as an abbreviated dialing number is an international telephone number from Japan to the U.S., it is "001-1-212-9xx-xxxx". Assume that the current location of the user specified by the acquired location information upon dialing this abbreviated dialing number is the U.S. In this case, the connection information converter 13 converts a full telephone number corresponding to the abbreviated dialing number into "212-9xx-xxxx" by removing international number identification code "001" and country code "1" of the U.S. from that number. In this case, the connection information storage 2 can pre-store a conversion rule for converting an international telephone number into a local telephone number for each country.

As described above, according to the example , the user can place an international call using a telephone number stored as an abbreviated dialing number in his or her mobile phone anywhere in the world (regardless of an international telephone number). That is, the user need only select an abbreviated dialing number to place an international call, and need not re-input such a long number string that readily leads to errors as an international telephone number. Hence, the load on the user upon placing an international call can be reduced.

A further example useful for understanding of the present invention will be described below focusing on differences from the invention and the first example.

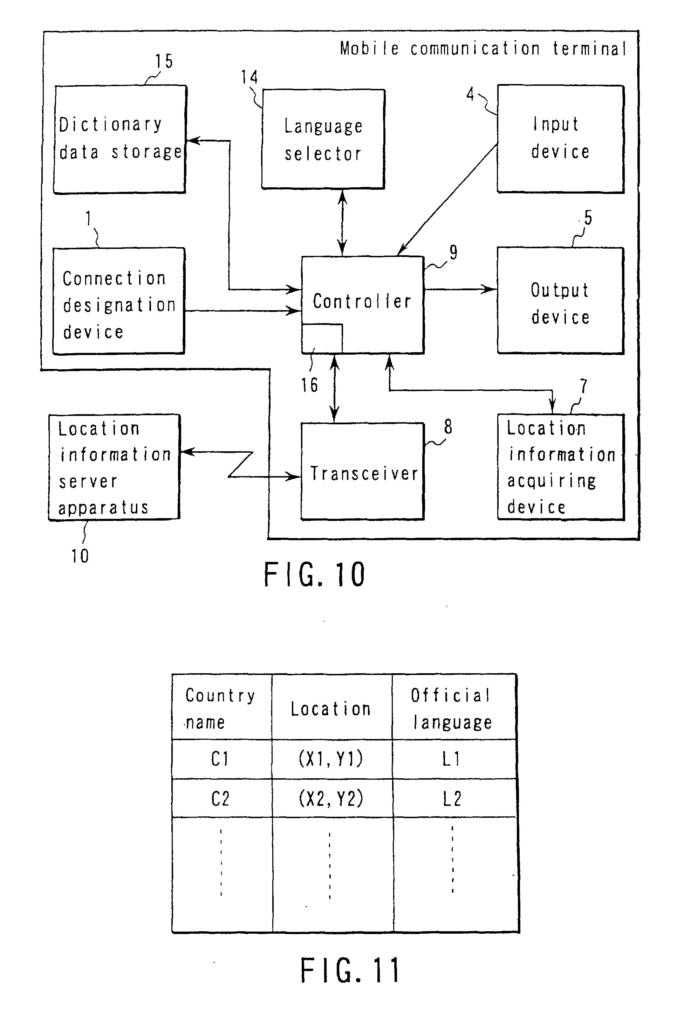

FIG. 10 shows an example of the arrangement of a mobile communication terminal (e.g., a mobile phone, PHS, or the like) according to the further example and only differences from FIG. 1 will be explained below. More specifically, a language selector 14 is connected to the controller 9 in place of the selector 3 in FIG. 1, and a dictionary data storage 15 is connected in place of the connection information storage 2 in FIG. 1.

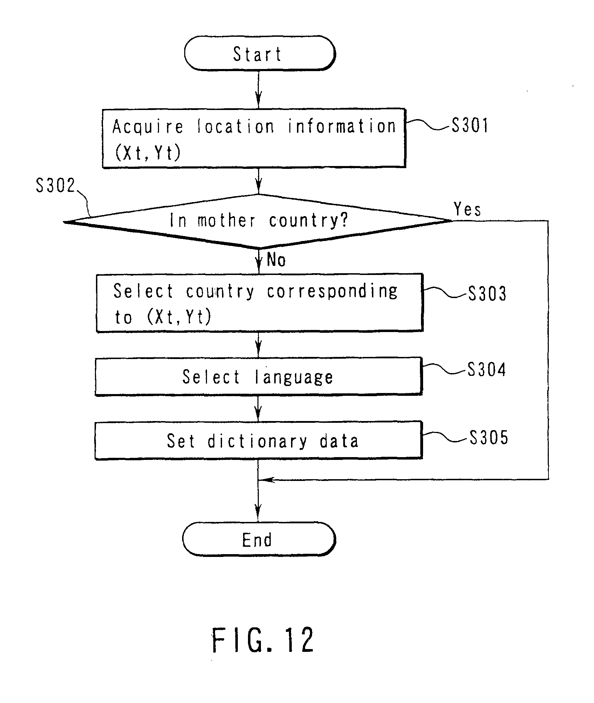

The language selector 14 selects a language used in a country corresponding to location information acquired by the location information acquiring device 7 on the basis of that location information. For this purpose, the language selector 14 stores a table which registers representative locations and official languages in association with country names, as shown in FIG. 11. The location of each country expresses not only the representative location using the latitude and longitude, but also the range of a region of the corresponding country using the latitude and longitude. In this example, the latter case will be explained.

The dictionary data storage 15 stores dictionary data that allows mutual translation between a specific language (e.g., user's mother language) and other languages. The dictionary data storage 15 stores dictionary data which allows mutual translation between the language selected by the language selector 14 and the specific language (e.g., user's mother language), so that the user can access that data.

The controller 9 comprises a translation engine (translation processor) 16 which translates the contents on a web page, text, or the like, which is designated by the user, using the dictionary data (the language selected by the language selector 14 and the specific language (e.g., user's mother language) stored in the dictionary data storage 15.

The processing operation of the mobile communication terminal shown in FIG. 10 will be described below with reference to the flow chart shown in FIG. 12.

After the current location is specified (location information is acquired) in the same manner as in the above example (step S301), the language selector 14 compares the acquired location information and location information of each country obtained from the table shown in FIG. 11 to check if the user is in his or her country (step S302). For example, if the user ordinarily lives in Japan, and the acquired location information indicates a location within the region of Japan, it is determined that the user is in his or her country. If it is determined that the user is in his or her country, the processing ends.

If it is determined in step S302 that the user is not in his or her country, the language selector 14 selects a country most suitable for the acquired location information (e.g., a country having location information closest to the acquired location information) from the table shown in FIG. 11 (step S303). For example, a country that includes a location indicated by the acquired location information within the region of that country is selected.

The language selector 14 further reads out a language corresponding to the selected country from the table shown in FIG. 11. For example, when the user whose mother language (specific language) is Japanese is currently in the U.S., the language selector 14 selects English.

At this time, in the dictionary data storage 15, dictionary data (e.g., English-Japanese/Japanese-English dictionary data) that allows mutual translation between the language selected by the language selector 14 and the specific language (e.g., user's mother language), so that the user can access that data as needed.

In this arrangement, when the user inputs a local word, the meaning of which is to be checked, from the input device 4, and designates to look up a dictionary, the dictionary data stored in the dictionary data storage 15 is searched for a word in the user's mother language corresponding to the input local word. Then, the search result is displayed on a display as the output device 5.

The controller 9 translates Japanese text input from the input device 4 into English in accordance with a user's instruction. The controller 9 displays the translation result on a display as the output device 5.

Furthermore, the controller 9 translates the contents of a web page of the Internet received via the transceiver 8 in accordance with a user's instruction into Japanese, and displays the translation result on a display as the output device 5.

As described above, in the mobile communication terminal according to the further example, the language selector 14 automatically selects a dictionary of a language corresponding to the current visiting country of the user. Therefore, the user can retrieve or automatically translate words that he or she cannot understand, using an electronic dictionary of the language used in the current location of the user. Also, the user can easily translate the contents of a web page or an e-mail message to be received/sent, which is described in a local language, into the mother language in accordance with the current visiting region (country) of the user.

As described above, the mobile communication terminal according to the invention and first example can be easily connected to a communication partner of user's choice in accordance with the current location of the user. Also, using the server apparatus of the invention, latest connection information to a unique and optimal service provider (e.g., the closest or cheapest connection point to a network such as the Internet or the like, or a service provider that provides a required service upon emergency) for each region can be easily provided to the mobile communication terminal, corresponding to the current user location.

## Claims

1. A call originating method applied to a mobile communication terminal communicating with one of a plurality of servers (100) using a connection information item corresponding to the one of the servers (100), each of the servers (100) being provided to one of a plurality of regions and storing a latest table containing emergency telephone numbers which are for use in the one of the regions and correspond to respective emergency telephone numbers for use in the user's motherland, the method comprising
a step of storing a plurality of connection information items corresponding to respective servers (100) and the servers' respective location information items corresponding to respective connection information items, in a first memory device (2);
a step of specifying a terminal's present location coordinate;
a step of selecting one of the servers (100), whose location information item is closest to the terminal's present location coordinate, based on the location information items stored in the first memory device (2).
a step of requesting a selected server (100) to download a latest table using one of the connection information items stored in the first memory device (2) the one of the connection information items corresponding to the selected server (100),
a step of storing the latest table downloaded from the selected server (100), in a second memory device (2);
a step of designating a emergency telephone number in the user's motherland;
a step of retrieving, from the latest table stored in the second memory device (2), the emergency telephone number which is for use in the one of the regions and corresponds to a designated emergency telephone number in the user's motherland
a step (8, 9) of calling, using the retrieved emergency telephone number.

2. A mobile communication terminal communicating with one of a plurality of servers (100) using a connection information item corresponding to the one of the servers (100), each of the servers (100) being provided to one of a plurality of regions and storing a latest table containing emergency telephone numbers which are for use in the one of the regions and correspond to respective emergency telephone numbers for use in the user's motherland, the mobile communication terminal comprising:
a first memory device (2) for storing a plurality of connection information items corresponding to respective servers (100) and the servers' respective location information items corresponding to respective connection information items;
means (7,9) for specifying a terminal's present location coordinate,
means (3,9) for selecting one of the servers (100), whose location information item is closest to the terminal's present location coordinate, based on the location information items stored in the first memory device (2),
means (8,9) for requesting a selected server (100) to download a latest table using one of the connection information items stored in the first memory device (2), the one of the connection information items corresponding to the selected server (100),
a second memory device (2) for storing the latest table downloaded from the selected server (100);
means (1,4,9) for designating a emergency telephone number in the user's motherland.
means (3,9) for retrieving, from the latest table stored in the second memory device (2), the emergency telephone number which is for use in the one of the regions and corresponds to a designated emergency telephone number in the user's motherland;
means (8,9) for calling, using the retrieved emergency telephone number

## Patentansprüche

1. Verfahren zum Aufbau eines Anrufes, welches bei einem mobilen Kommunikationsterminal angewandt wird, das mit einem aus einer Vielzahl von Servern (100) unter Verwendung eines Verbindungs- Informationselements gemäß dem einen der Server (100) kommuniziert, wobei jeder der Server (100) für ein Gebiet aus einer Vielzahl von Gebieten vorgesehen ist und eine jüngste bzw. letzte Tabelle speichert, die Notfall- Telefonnummern enthält, welche für die Verwendung in dem einen Gebiet der Gebiete dienen, und welche jeweiligen Notfall-Telefonnummern zur Verwendung in dem Heimatland des Benutzers entsprechen, wobei das Verfahren folgendes aufweist:
- einen Verfahrensschritt, bei dem eine Vielzahl von Verbindungs- Informationselemente gemäß jeweiligen Servern (100) und jeweilige Standort-Informationselemente der Server gemäß jeweiligen Verbindungs- Informationselementen in einer ersten Speichervorrichtung (2) gespeichert werden;
- einen Verfahrensschritt, bei dem eine gegenwärtige Standortkoordinate des Terminals spezifiziert wird;
- einen Verfahrensschritt, bei dem von einem Server der Server (100) ausgewählt wird, dessen Standort-Informationselement am nächsten zu der gegenwärtigen Standortkoordinate des Terminals liegt, und zwar basierend auf Standort-Informationselemente, die in der ersten Speichervorrichtung (2) gespeichert sind;
- einen Verfahrensschritt, bei dem ein ausgewählter Server (100) aufgefordert wird, eine jüngste bzw. letzte Tabelle herunterzuladen, und zwar unter Verwendung von einem der in der ersten Speichervorrichtung gespeicherten Verbindungs-Informationselemente, wobei das eine der Verbindungs- Informationselemente dem ausgewählten Server (100) entspricht;
- einen Verfahrensschritt, bei dem die jüngste bzw. letzte, von dem ausgewählten Server (100) heruntergeladene Tabelle in einer zweiten Speichervorrichtung (2) gespeichert wird;
- einen Verfahrensschritt, bei dem in dem Heimatland des Benutzers eine Notfall- Telefonnummer bestimmt bzw. bezeichnet wird;
- einen Verfahrensschritt, bei dem von der jüngste bzw. letzten, in der zweiten Speichervorrichtung (2) gespeicherten Tabelle jene Notfall-Telefonnummer wiedergewonnen bzw. ausgelesen wird, welche zur Verwendung in dem einen Gebiet der Gebiete dient, und welche in dem Heimatland des Benutzers einer bestimmten bzw. bezeichneten Notfall- Telefonnummer entspricht;
- einen Verfahrensschritt (8, 9), bei dem unter Verwendung der wiedergewonnenen bzw. ausgelesenen Notfall- Telefonnummer angerufen wird.

2. Mobiles Kommunikationsterminal, welches mit einem aus einer Vielzahl von Servern (100) unter Verwendung eines Verbindungs- Informationselements gemäß dem einen der Server (100) kommuniziert, wobei jeder der Server (100) für ein Gebiet aus einer Vielzahl von Gebieten vorgesehen ist und eine jüngste bzw. letzte Tabelle speichert, die Notfall- Telefonnummern enthält, welche für die Verwendung in dem einen Gebiet der Gebiete dienen, und welche jeweiligen Notfall- Telefonnummern zur Verwendung in dem Heimatland des Benutzers entsprechen, wobei das mobile Kommunikationsterminal folgendes aufweist:
- eine erste Speichervorrichtung (2), um eine Vielzahl von Verbindungs- Informationselemente gemäß jeweiligen Servern (100) und jeweilige Standort- Informationselemente der Server gemäß jeweiligen Verbindungs- Informationselementen zu speichern;
- eine Einrichtung (7, 9), um eine gegenwärtige Standortkoordinate eines Terminals zu spezifizieren;
- eine Einrichtung (3, 9), um einen der Server (100) auszuwählen, dessen Standort- Informationselement am nächsten zu der gegenwärtigen Standortkoordinate des Terminals liegt, und zwar basierend auf Standort- Informationselemente, die in der ersten Speichervorrichtung (2) gespeichert sind;
- eine Einrichtung (8, 9), um einen ausgewählten Server (100) aufzufordern, eine jüngste bzw. letzte Tabelle herunterzuladen, und zwar unter Verwendung von einem der in der ersten Speichervorrichtung gespeicherten Verbindungs- Informationselementen, wobei das eine der Verbindungs-Informationselemente dem ausgewählten Server (100) entspricht;
- eine zweite Speichervorrichtung (2), um die jüngste bzw. letzte, von dem ausgewählten Server (100) heruntergeladene Tabelle zu speichern;
- eine Einrichtung (1, 4, 9), um eine Notfall-Telefonnummer in dem Heimatland des Benutzers zu bestimmen bzw. zu bezeichnen;
- eine Einrichtung (3, 9), um von der jüngste bzw. letzten, in der zweiten Speichervorrichtung (2) gespeicherten Tabelle jene Notfall- Telefonnummer wiederzugewinnen bzw. auszulesen, welche zur Verwendung in dem einen Gebiet der Gebiete dient, und welche in dem Heimatland des Benutzers einer bestimmten bzw. bezeichneten Notfall- Telefonnummer entspricht;
- eine Einrichtung (8, 9), um unter Verwendung der wiedergewonnenen bzw. ausgelesenen Notfall-Telefonnummer anzurufen.

## Revendications

1. Procédé de génération d'un appel appliqué à un terminal de communication mobile communiquant avec l'un d'une pluralité de serveurs (100) utilisant un article d'information de connexion correspondant à l'un des serveurs (100), chacun des serveurs (100) étant délivré à l'une d'une pluralité de régions et mémorisant une dernière table contenant des numéros de téléphone d'urgence qui sont utilisés dans l'une des régions et correspondant à des numéros de téléphone d'urgence respectifs utilisés dans le pays natal de l'utilisateur, procédé comprenant :
une étape de mémorisation d'une pluralité d'articles d'information de connexion correspondant aux serveurs respectifs (100) et les articles d'information d'emplacement respectif des serveurs correspondant aux articles d'information de connexion respectifs, dans un premier dispositif de mémoire (2) ;
une étape (7, 9) de spécification d'une coordonnée d'emplacement actuel de terminal ;
une étape (3, 9) de sélection d'un des serveurs (100), dont l'article d'information d'emplacement est le plus proche de la coordonnée d'emplacement actuel de terminal, en fonction des articles d'information d'emplacement mémorisés dans le premier dispositif de mémoire (2) ;
une étape (8, 9) de requête d'un serveur choisi (100) pour télécharger une dernière table utilisant un des articles d'information de connexion mémorisé dans le premier dispositif de mémoire (2)), l'un des articles d'information de connexion correspondant au serveur sélectionné (100),
une étape de mémorisation de la dernière table téléchargée depuis le serveur sélectionné (100) dans un second dispositif de mémoire (2) ;
une étape (1, 4, 9) de désignation d'un numéro de téléphone d'urgence dans le pays natal de l'utilisateur ;
une étape (3, 9) de récupération, depuis la dernière table mémorisée dans le second dispositif de mémoire (2), du numéro de téléphone d'urgence qui est utilisé dans l'une des régions et correspond au numéro de téléphone d'urgence désigné dans le pays natal de l'utilisateur ;
une étape (8, 9) d'appel, en utilisant le numéro de téléphone d'urgence récupéré.

2. Terminal de communication mobile communiquant avec l'un d'une pluralité de serveurs (100) utilisant un article d'information de connexion correspondant à l'un des serveurs (100), chacun des serveurs (100) étant délivré à l'une d'une pluralité de régions et mémorisant une dernière table contenant des numéros de téléphone d'urgence qui sont utilisés dans l'une des régions et correspondent aux numéros de téléphone d'urgence utilisés dans le pays natal de l'utilisateur, le terminal de communication mobile comprenant :
un premier dispositif de mémoire (2) pour mémoriser une pluralité d'articles d'information de connexion correspondant aux serveurs respectifs (100) et les articles d'information d'emplacement respectif des serveurs (100) correspondant aux articles d'information de connexion respectifs ;
des moyens (7, 9) pour spécifier une coordonnée d'emplacement actuel de terminal,
des moyens (3, 9) pour sélectionner l'un des serveurs (100) dont l'article d'information d'emplacement est le plus proche de la coordonnée d'emplacement actuel de terminal, en fonction des articles d'information d'emplacement mémorisés dans le premier dispositif de mémoire (2),
des moyens (8, 9) pour demander un serveur sélectionné (100) pour télécharger une dernière table utilisant l'un des articles d'information de connexion mémorisé dans le premier dispositif de mémoire (2), l'un des articles d'information de connexion correspondant au serveur sélectionné (100) ;
un second dispositif de mémoire (2) pour mémoriser la dernière table téléchargée depuis le serveur sélectionné (100),
des moyens (1, 4, 9) pour désigner un numéro de téléphone d'urgence dans le pays natal de l'utilisateur,
des moyens (3, 9) pour récupérer, depuis la dernière table mémorisée dans le second dispositif de mémoire (2), le numéro de téléphone d'urgence qui est utilisé dans l'une des régions et correspond au numéro de téléphone d'urgence désigné dans le pays natal de l'utilisateur ;
des moyens (8, 9) pour appeler en utilisant le numéro de téléphone d'urgence récupéré.
